# EUROPEAN PATENT APPLICATION

(11) **EP 4 293 982 A1**
(43) Date of publication of application: **20.12.2023**
(21) Application number: 22770378.2
(22) Date of filing: 10.03.2022
(51) Int. Cl.: H04L 45/655, H04L 45/645

(54) **PACKET PROCESSING METHOD, NETWORK DEVICE, AND CONTROLLER**

(30) Priority: 16.03.2021 CN 202110281996
(71) Applicant: Huawei Technologies Co., Ltd., Shenzhen, Guangdong 518129 (CN)
(72) Inventor: ZHENG, Juan, Shenzhen, Guangdong 518129 (CN); XU, Guoqi, Shenzhen, Guangdong 518129 (CN); BAO, Lei, Shenzhen, Guangdong 518129 (CN); CHEN, Xinjun, Shenzhen, Guangdong 518129 (CN); LIAO, Ting, Shenzhen, Guangdong 518129 (CN)
(74) Representative: Grünecker Patent- und Rechtsanwälte PartG mbB
(86) International application number: PCT/CN2022/080185
(87) International publication number: WO 2022/194023

(57) **Abstract**

This application provides a message processing method, a network device, and a controller, and pertains to the field of communication technologies. In this application, slice information, such as an identifier of a network slice and information about a path in the network slice, is carried in a message, and the message is reported to the controller, so that slice information on a forwarding plane is consistent with slice information on a control plane, and the controller controls a message forwarding path based on slice information on the network device. Therefore, this helps improve an effect of controlling the message forwarding path by the controller

## Description

This application claims priority to Chinese Patent Application No. 202110281996.8, filed on March 16, 2021 and entitled "MESSAGE PROCESSING METHOD, NETWORK DEVICE, AND CONTROLLER", which is incorporated herein by reference in its entirety.

### TECHNICAL FIELD

This application relates to the field of communication technologies, and in particular, to a message processing method, a network device, and a controller.

### BACKGROUND

A network slice (network slice or logically isolated network partition) refers to a complete, autonomous, and independently operated and maintained logical network formed by organizing related service functions and network resources that are on a physical network. Based on a network slicing technology, a same physical network can form a plurality of virtual networks that have independent management, independent control, and independent forwarding capabilities and that are isolated from each other. In this way, services with differentiated bearer requirements can be supported. Therefore, network slicing has become a key technology in a future network architecture.

Currently, information about a network slice on a control plane is often inconsistent with information about the network slice on a forwarding plane, which affects an effect of controlling a message forwarding path by the control plane.

### SUMMARY

Embodiments of this application provide a message processing method, a network device, and a controller, to help improve an effect of controlling a message forwarding path by the controller. The technical solutions are described below.

According to a first aspect, a message processing method is provided. The method includes: A network device generates an advertisement message. The advertisement message includes an identifier of a network slice and path information of one or more paths in the network slice. The network device sends the advertisement message to a controller.

In the foregoing method, the network device includes slice information, such as the identifier of the network slice and the information about the path in the network slice, in the message, and reports the message to the controller, so that slice information on a forwarding plane is consistent with slice information on a control plane, and the controller controls a message forwarding path based on the slice information on the network device. Therefore, this helps improve the effect of controlling the message forwarding path by the controller.

Optionally, the advertisement message may be a border gateway protocol-link state (border gateway protocol link state, BGP-LS) message.

A protocol message, such as the BGP-LS message, is extended to report the identifier of the network slice, so that an existing protocol can be reused, and implementation complexity is reduced.

Optionally, the identifier of the network slice is carried in an SR policy candidate path descriptor TLV (SR Policy Candidate Path Descriptor TLV) of the BGP-LS message.

Optionally, the identifier of the network slice is carried in a sub-TLV of the SR policy candidate path descriptor TLV. The sub-TLV includes a slice identifier (Slice ID) field, and the slice ID field stores the identifier of the network slice.

A sub-TLV is extended to carry a slice identifier, so that overheads are low, and implementation complexity is low.

Optionally, the path information includes a segment identifier (segment ID, SID) list corresponding to the one or more paths.

The SID list of the path and the identifier of the network slice are reported to the controller together, to indicate a network slice to which the SID list belongs, which helps use the SID list to perform path computation, path optimization, and the like in the network slice.

Optionally, the path information further includes status information of the one or more paths.

The status information of the path and the identifier of the network slice are reported to the controller together, to indicate a status of the path in the network slice, which helps the controller monitor the status of the path in the network slice in real time.

Optionally, the status information includes one or more of the following information: at least one of traffic statistics information, network performance information, and connectivity information.

The identifier of the network slice, together with the traffic statistics information, the network performance information, the connectivity information, or the like, is reported to the controller, which helps the controller perform traffic statistics collection, performance monitoring, connectivity monitoring, and the like on the network slice, to support more application scenarios.

Optionally, the connectivity information identifies whether a corresponding path is available or unavailable.

Optionally, the advertisement message indicates the controller to control a message forwarding path based on the identifier of the network slice and the path information.

Optionally, the network device is an ingress node of a segment routing (segment routing, SR) network.

The identifier of the network slice and the path information of the path in the network slice are reported through the ingress node of the SR network. Because the ingress node is a node responsible for encapsulating path information, such as a SID list, when a service message enters the SR Network, it is beneficial to improving accuracy of reported information.

According to a second aspect, a message processing method is provided, including:

A controller receives an advertisement message sent by a network device. The advertisement message includes an identifier of a network slice and path information of one or more paths in the network slice.

The controller controls a message forwarding path based on the identifier of the network slice and the path information of the one or more paths in the network slice.

Optionally, the advertisement message may be a BGP-LS message.

Optionally, the identifier of the network slice is carried in an SR policy candidate path descriptor TLV of the BGP-LS message.

Optionally, the identifier of the network slice is carried in a sub-TLV of the SR policy candidate path descriptor TLV. The sub-TLV includes a slice ID field, and the slice ID field stores the identifier of the network slice.

Optionally, the path information includes a SID list corresponding to the one or more paths.

Optionally, the path information further includes status information of the one or more paths.

Optionally, the status information includes one or more of the following information: at least one of traffic statistics information, network performance information, and connectivity information.

Optionally, the connectivity information identifies whether a corresponding path is available or unavailable.

Optionally, that the controller controls a message forwarding path based on the identifier of the network slice and the path information of the one or more paths in the network slice includes:

The controller obtains a second path when determining that a first path in the one or more paths is unavailable. The second path is configured to bear traffic forwarded on the first path.

Optionally, that the controller controls a message forwarding path based on the identifier of the network slice and the path information of the one or more paths in the network slice includes:

The controller obtains the second path when determining that a bandwidth utilization rate of the first path in the one or more paths reaches a threshold. The second path is configured to bear the traffic forwarded on the first path.

Optionally, the bandwidth utilization rate of the first path is a bandwidth utilization rate of one or more links on the first path.

Optionally, the second path is a path in a network slice corresponding to the identifier of the network slice.

Optionally, the second path is calculated by the controller based on a network topology of the network slice corresponding to the identifier of the network slice.

Optionally, the method further includes: The controller sends a SID list corresponding to the second path to the network device.

According to a third aspect, a network device is provided, configured to perform the first aspect or any possible implementation of the first aspect. Specifically, the network device includes a unit configured to perform the method according to the first aspect or any possible implementation of the first aspect.

In some embodiments, the unit in the network device is implemented through software, and the unit in the network device is a program module. In some other embodiments, the unit in the network device is implemented through hardware or firmware. For specific details of the network device provided in the third aspect, refer to the first aspect or any possible implementation of the first aspect. Details are not described herein again.

According to a fourth aspect, a controller is provided, configured to perform the method in the second aspect or any possible implementation of the second aspect. Specifically, the controller includes a unit configured to perform the method in the second aspect or any possible implementation of the second aspect.

In some embodiments, the unit in the controller is implemented through software, and the unit in the controller is a program module. In some other embodiments, the unit in the controller is implemented through hardware or firmware. For specific details of the controller provided in the fourth aspect, refer to the second aspect or any possible implementation of the second aspect. Details are not described herein again.

According to a fifth aspect, a network device is provided. The network device includes a processor and a communication interface. The processor is configured to execute instructions, so that the network device is enabled to perform the method according to the first aspect or any possible implementation of the first aspect. The communication interface is configured to send or receive a message. For specific details of the network device provided in the fifth aspect, refer to the first aspect or any possible implementation of the first aspect or the second aspect or any possible implementation of the second aspect. Details are not described herein again.

According to a sixth aspect, a controller is provided. The controller includes a processor and a communication interface. The processor is configured to execute instructions, so that the controller is enabled to perform the method according to the second aspect or any possible implementation of the second aspect. The communication interface is configured to send or receive a message. For specific details of the controller provided in the sixth aspect, refer to the second aspect or any possible implementation of the second aspect. Details are not described herein again.

According to a seventh aspect, a computer-readable storage medium is provided. The storage medium stores at least one instruction. When the at least one instruction is executed on a network device, the network device is enabled to perform the method according to the first aspect or any possible implementation of the first aspect.

According to an eighth aspect, a computer-readable storage medium is provided. The storage medium stores at least one instruction. When the at least one instruction is executed on a controller, the controller is enabled to perform the method according to the second aspect or any possible implementation of the second aspect.

According to a ninth aspect, a computer program product is provided. The computer program product includes computer instructions. The computer instructions are stored in a computer-readable storage medium. A processor of a network device reads the computer instructions from the computer-readable storage medium, and the processor executes the computer instructions, so that the network device is enabled to perform the method according to the first aspect or any possible implementation of the first aspect.

According to a tenth aspect, a computer program product is provided. The computer program product includes computer instructions. The computer instructions are stored in a computer-readable storage medium. A processor of a controller reads the computer instructions from the computer-readable storage medium, and the processor executes the computer instructions, so that the controller is enabled to perform the method according to the second aspect or any possible implementation of the second aspect.

According to an eleventh aspect, a chip is provided. When the chip runs on a network device, the network device is enabled to perform the method according to the first aspect or any possible implementation of the first aspect.

According to a twelfth aspect, a chip is provided. When the chip runs on a controller, the controller is enabled to perform the method according to the second aspect or any possible implementation of the second aspect.

According to a thirteenth aspect, a network system is provided. The network system includes a network device and a controller. The network device is configured to perform the first aspect or any possible implementation of the first aspect. The controller is configured to perform the method according to the second aspect or any possible implementation of the second aspect.

### BRIEF DESCRIPTION OF DRAWINGS

FIG. 1 is a schematic diagram of a system architecture of a network system according to an embodiment of this application;
FIG. 2 is a flowchart of a message processing method according to an embodiment of this application;
FIG. 3 is a schematic diagram of a format of a BGP-LS message according to an embodiment of this application;
FIG. 4 is a schematic diagram of a format of a BGP-LS message according to an embodiment of this application;
FIG. 5 is a schematic diagram of a format of a BGP-LS message according to an embodiment of this application;
FIG. 6 is a schematic diagram of a network slice deployment scenario according to an embodiment of this application;
FIG. 7 is a schematic diagram of a tunnel monitoring scenario according to an embodiment of this application;
FIG. 8 is a schematic diagram of a tunnel optimization scenario according to an embodiment of this application;
FIG. 9 is a schematic diagram of a structure of a device according to an embodiment of this application;
FIG. 10 is a schematic diagram of a structure of a device according to an embodiment of this application;
FIG. 11 is a schematic diagram of a structure of a network device according to an embodiment of this application; and
FIG. 12 is a schematic diagram of a structure of a controller according to an embodiment of this application.

### DESCRIPTION OF EMBODIMENTS

To make the objectives, technical solutions, and advantages of this application clearer, the following further describes the implementations of this application in detail with reference to the accompanying drawings.

The following explains and describes some terms and concepts in embodiments of this application.

### (1) Network slice

A network slice, also referred to as network slicing, is a logical network. Network slicing enables an operator to build a plurality of dedicated, virtualized, and isolated logical networks on a general physical network to meet different requirements of different customers for network resources. For example, a physical network is divided into three network slices: a network slice A, a network slice B, and a network slice C. The network slice A is configured to bear traffic of a video service. The network slice B is configured to bear traffic of an automatic driving service, and the network slice C is configured to bear traffic of a voice call service.

### (2) Segment routing (segment routing, SR)

SR is a technology of forwarding a message based on source routing. A basic principle of the SR is to include a segment list (segment list) in a header of a data message and transmit it together with the message. The segment list is an ordered list including a segment (segment). The SR technology includes segment routing multi-protocol label switching (segment routing multi-protocol label switching, SR-MPLS) technology and segment routing over Internet protocol version 6 (segment routing over Internet Protocol version 6, SRv6) technology. In SR-MPLS, the segment list is a label stack. In SRv6, the segment list is an Internet protocol version 6 (Internet Protocol version 6, IPv6) address list.

### (3) SRv6

SRv6 is a technology of forwarding an IPv6 message based on source routing. A basic principle of the SRv6 is that a head node adds a segment routing header (segment routing header, SRH, a routing extension header) to an IPv6 message. The SRH includes a segment identifier list (SID List). An intermediate node uses the segment identifier (segment ID, SID) in the SRH to update a destination address in an IPv6 basic header of the IPv6 message, to implement hop-by-hop forwarding.

### (4) SR policy (SR policy)

An SR policy is a technology of including a segment list in a data message to implement traffic engineering. The traffic engineering is a technology of supporting forwarding of specified traffic through a specified path in a network based on an optimization objective. The specified path is generally a non-internal gateway protocol (internal gateway protocol, IGP) shortest path. The SR policy includes an MPLS-based SR-MPLS policy and an SRv6-based SRv6 policies. An SR policy includes at least one or more candidate paths (candidate paths). A candidate path includes one or more segment lists (segment lists). An SR policy is generally identified by three types of information: a headend (headend), a color (color), and an endpoint (endpoint).

### (5) Headend

A headend is a node on which an SR policy is generated. The headend is responsible of importing a data message to the SR policy. In other words, in a tunnel created based on the SR policy, the headend is a source device of the tunnel.

### (6) Color

A color is for distinguishing different SR policies between a headend and an endpoint in a same pair. The color is generally a 32-bit value. The color generally represents an intention, that is, a condition that needs to be met for the data message to reach the endpoint from the headend. For example, there are two SR policies between the headend and the endpoint. A color of an SR policy A is a color 10. A color of an SR policy B is a color 20. The color 10 indicates that a delay is less than a specified delay threshold, and the color 20 indicates that a specified node is not passed through.

### (7) Endpoint

An endpoint is an end node of an SR policy. In other words, in a tunnel created based on the SR policy, the endpoint is a destination device of the tunnel. The endpoint is generally represented by an Internet protocol (Internet Protocol, IP) address.

### (8) Candidate path

A candidate path is a path that can be selected in an SR policy. The candidate path indicates a manner in which the data message is forwarded from a headend of the SR policy to an endpoint of the SR policy. Each candidate path has a priority. The priority is for selecting the candidate path from the SR policy. An effective candidate path with a highest priority in an SR policy is a primary path in the SR policy. The candidate path may be learned in different manners such as a local configuration, a network configuration (network configuration, NETCONF), a path computation element communication protocol (path computation element communication protocol, PCEP), or a border gateway protocol (border gateway protocol, BGP).

### (9) Telemetry (telemetry)

Telemetry is a technology of collecting data from a device remotely. A basic principle of telemetry is that a network device actively reports collected data in a push mode (push mode). The collected data includes, but is not limited to, traffic statistics information, a message loss rate, a central processing unit (central processing unit, CPU) occupancy rate, a memory occupancy rate, and the like. Based on the telemetry, a more real-time and higher-speed data collection function is provided, which helps quickly locate a network fault.

### (10) Segment identifier list (SID List)

A SID list indicates a message forwarding path. The SID list is an ordered list including one or more SIDs. The SID list indicates a corresponding path. Each SID is in a form of an IPv6 address. Therefore, the SID list can be understood as an explicit IPv6 address stack. The SID list is inserted into a data message on an ingress node of an SR network.

### (11) SID

A SID is an identifier of a segment (segment, also referred to as a fragment). The segment represents a specified operation. The operation represents by the segment may be any operation related to message processing. For example, the segment represents forwarding a message to a specified node, forwarding a message through a specified egress interface, and the like. Optionally, when being applied to an SRv6 scenario, the SID is an IPv6 address. Alternatively, when being applied to an SR-MPLS scenario, the SID is an MPLS label.

### (12) Endpoint (endpoint, End) SID

An End SID identifies a destination node (node) in an SR network.

### (13) Endpoint with layer-3 cross-connect (endpoint with layer-3 cross-connect, End.X) SID

An End.X SID identifies a link in the SR network.

As demands for mobile and fixed network services of operators continuously increase, it often happens that a plurality of services are deployed on a same network. To ensure that bandwidths of various services are not preempted by other services, bandwidths of different services need to be isolated from each other. There are great differences between traffic characteristics of different types of services borne on the network. For example, it is difficult to estimate the bandwidth of personal fixed broadband services, which are mainly Internet access traffic, requiring large-bandwidth, large-burst, and best-effort services. These services are insensitive to a delay, which may reach 50 ms (ms). Enterprise services include both delay-sensitive services and delay-insensitive services, and generally have a specific bandwidth-delay service level agreement (service level agreement, SLA). Mobile carrier services include delay-sensitive services and delay-insensitive services. Convergence ratios of different service types are quite different.

The requirements in the preceding scenarios can be met through the network slicing technology. In the network slicing technology, flexible Ethernet (Flexible Ethernet, Flex Eth, or FlexE) interfaces or channelized interfaces are used to divide a physical network into a plurality of hard-isolated network slices. Each network slice independently has a service deployed. Bandwidths of different network slices are hard-isolated and do not affect each other. In addition, mapping between services and physical slices may be implemented through the SRv6, to meet demands of customers for guaranteeing differentiated service SLAs.

Currently, information about a network slice configured on a forwarding plane (for example, a network device) is often inconsistent with information about the network slice on a control plane (for example, a controller).

There are two typical reasons for the slice information inconsistency. One typical reason is that after the controller delivers slice information to the network device, the network device subsequently updates slice information. For example, the controller delivers slice information A to the network device through a border gateway protocol-link state (border gateway protocol-link state, BGP-LS) message. After obtaining the slice information A sent by the controller, the network device obtains slice information B by using protocols such as NETCONF and PCEP. The network device updates locally configured slice information from the slice information A to the slice information B. As a result, the slice information on the network device is inconsistent with the slice information on the controller. The other typical reason is that the control plane includes a plurality of controllers. After a controller A delivers slice information to the network device, only the controller A on the control plane has the slice information on the network device, and controllers other than the controller A do not have the slice information on the network device.

The slice information inconsistency causes many problems. For example, when the controller performs path computation or optimization based on slice information, because the slice information used by the controller is not actual slice information on the network device, the path computation or optimization performance of the controller has a poor effect.

In embodiments of this application, the network device reports to the controller the slice information such as the identifier of the network slice and the information about the path in the network slice, so that the slice information on the forwarding plane is consistent with the slice information on the control plane. Therefore, the controller can perform tasks of controlling a message forwarding path, such as path computation or path optimization, based on the actual slice information on the network device, so that path control performance of the controller is improved.

A system architecture in embodiments of this application is described below by using an example.

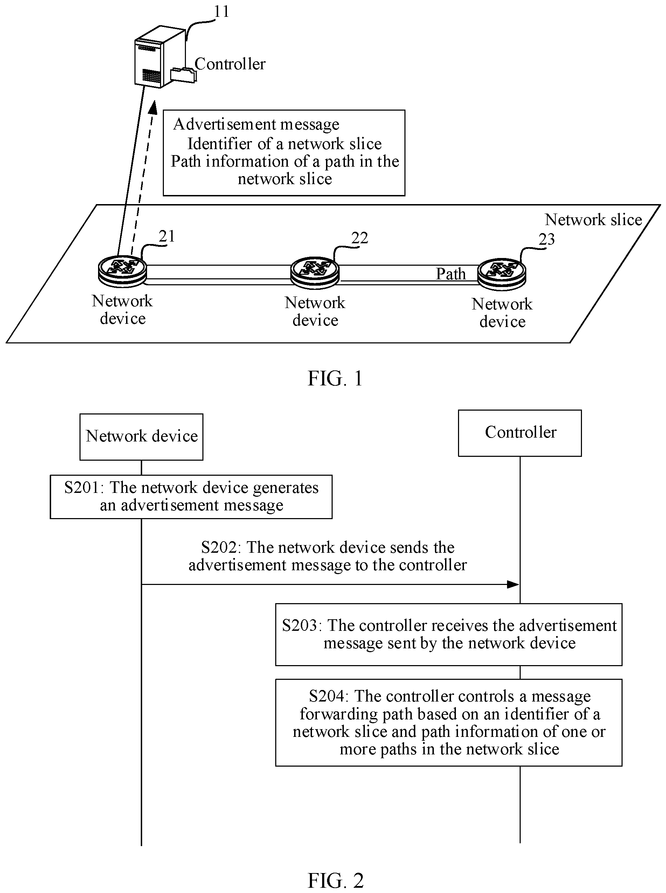

FIG. 1 is a schematic diagram of a system architecture of a network system according to an embodiment of this application. As shown in FIG. 1, the network system includes a controller 11, a network device 21, a network device 22, and a network device 23.

The controller 11 includes, but is not limited to, a server, a personal computer, a host, or the like. The controller 11 is configured to deploy a network slice in a network system, and deploy one or more paths in the network slice to bear a service. Optionally, the controller 11 is further configured to monitor and optimize the one or more paths in the network slice.

The network device 21, the network device 22, and the network device 23 include, but are not limited to, a switch, a router, and the like. The network device 21, the network device 22, and the network device 23 are configured to forward a data message based on the path in the network slice.

Optionally, the network device 21, the network device 22, and the network device 23 play different roles. The network device 21 is an ingress node of the network. The network device 21 is configured to add an identifier of the network slice and path information of the path in the network slice to the data message. The network device 22 is an intermediate node of the network. The network device 22 is configured to forward the data message along the path corresponding to the path information based on the identifier of the network slice and the path information in the data message. The network device 23 is an egress node of the network. The network device 23 is configured to remove the identifier of the network slice and the path information from the data message, and then forward the data message from the network.

Optionally, the system architecture shown in FIG. 1 includes an SR network. The network device 21 is an ingress node of the SR network. The network device 22 is an intermediate node of the SR network. The network device 23 is an egress node of the SR network. The system architecture shown in FIG. 1 is configured for a network slice supporting an SR policy. A basic principle of the network slice supporting the SR policy is to include an identifier of the network slice and a SID list in the SR policy in a data message. For example, when a data message from a private network arrives at the network device 21, the network device 21 encapsulates a hop-by-hop options header (hop-by-hop options header, HBH) and an SRH into the data message. The HBH header includes the identifier (network slice identifier, slice ID) of the network slice. The SRH includes the SID list. The network device 21 queries a routing table based on a SID carried in a destination address field, to obtain an egress interface and a next-hop address of routing. The network device 21 determines, based on the identifier of the network slice, a slice interface corresponding to the identifier of the network slice from the one or more slice interfaces corresponding to the egress interface of the routing, and forwards the data message through the slice interface. The network device 22 forwards the data message based on the slice ID and the SID list in the data message in a manner similar to that of the network device 21, so that the data message is forwarded to the network device 23 along a path corresponding to the SID list. When the data message arrives at the network device 23, the network device 23 removes the HBH header from the data message, and then forwards the data message to the private network.

A method procedure in an embodiment of this application is described below by using an example.

FIG. 2 is a flowchart of a message processing method according to an embodiment of this application. The method shown in FIG. 2 includes the following step S201 to step S204.

Optionally, FIG. 1 shows a network deployment scenario on which the method shown in FIG. 2 is based. For example, with reference to FIG. 1, a network device in the method shown in FIG. 2 is the network device 21, the network device 22, or the network device 23 in FIG. 1. A controller in the method shown in FIG. 2 is the controller 11 in FIG. 1.

Optionally, the method shown in FIG. 2 is applied to an SR network, and the network device in the method shown in FIG. 2 is an ingress node of the SR network.

Step S201: A network device generates an advertisement message.

A protocol type of the advertisement message includes many cases. Optionally, the advertisement message is a BGP-LS message. The BGP-LS is a protocol obtained by extending the BGP. The BGP-LS is generally configured to report topology information to the controller. The BGP-LS is extended for reporting an identifier of a network slice and information about a path to the controller, so that an existing protocol can be reused as much as possible, and implementation complexity is reduced. Alternatively, the advertisement message is a PCEP message, a simple network management protocol (simple network management protocol, SNMP) message, or another protocol message.

The advertisement message includes the identifier of the network slice and path information of one or more paths in the network slice.

The identifier of the network slice identifies the network slice. The network device may obtain the identifier of the network slice in many manners. For example, the network device obtains the identifier of the network slice in a manner such as static configuration, dynamic delivery, or learning from a neighbor. The static configuration manner means that an administrator configures the identifier of the network slice on the network device through a command-line interface, a web interface, or the like. The dynamic delivery manner means that the controller device sends the identifier of the network slice to the network device by using NETCONF, BGP, PCEP, or another protocol that supports interaction between the control plane and the data plane. The manner of learning from a neighbor is that, for example, the network device obtains the identifier of the network slice from a message sent by a neighboring node in the network slice.

The path in the network slice is optionally a tunnel. The tunnel is an end-to-end path. For example, the tunnel includes, but is not limited to, a label switching path (Label Switching Path, LSP) tunnel, a traffic engineering (Traffic Engineering, TE) tunnel, a policy (policy) tunnel, and the like. Optionally, the path in the network slice is a path in the SR policy. For example, one or more paths in the network slice are one or more candidate paths (candidate paths) in the SR policy. For another example, one or more paths in the network slice are paths corresponding to one or more SID lists in the SR policy.

Optionally, the path information in the advertisement message includes a SID list corresponding to one or more paths. Specifically, the SID list includes a SID corresponding to a node or a link on the path. For example, when being applied to an SRv6 scenario, the SID list includes an End SID of one or more nodes on the path or an End.X SID of one or more links on the path. The SID list is carried in the message, so that the SR scenario is supported.

The network device may obtain the SID list in many manners. For example, the network device obtains the SID list in a manner such as static configuration, dynamic delivery, or learning from a neighbor. For another example, the network device performs path computation based on a topology of the network slice, to obtain the SID list.

Optionally, the path information in the advertisement message includes status information corresponding to one or more paths. The status information is for describing a status of a corresponding path.

Optionally, the status information of the path in the advertisement message includes one or more of the following information: at least one of traffic statistics information, network performance information, and connectivity information.

The traffic statistics information identifies traffic of the corresponding path. Optionally, the traffic statistics information is obtained by the network device by sampling and counting forwarded messages.

The network performance information identifies network performance of the corresponding path. For example, the network performance information includes a bandwidth, a delay, a message loss rate, a jitter, and the like of the path. Optionally, the network performance information is obtained by the network device by sending a performance detection message to a destination device of the path. The performance detection message includes, but is not limited to, an operations, administration, and maintenance (operations, administration, and maintenance, OAM) message, a two-way active measurement protocol (two-way active measurement protocol, TWAMP) message, and the like.

The connectivity information identifies whether a corresponding path is available (UP) or unavailable (down). Path unavailability is that, for example, one or more nodes on the path fail, or one or more links are disconnected. Optionally, the connectivity information is obtained by the network device by sending a connectivity detection message to the destination device of the path. The connectivity detection message includes, but is not limited to, a bidirectional forwarding detection (bidirectional forwarding detection, BFD) message, an Internet control message protocol (Internet control message protocol, ICMP) request message (ping), and the like.

Step S202: The network device sends the advertisement message to a controller.

Optionally, the advertisement message indicates the controller to control a message forwarding path based on the identifier of the network slice and the path information.

Step S203: The controller receives the advertisement message sent by the network device.

The controller can obtain the identifier of the network slice and the path information of the one or more paths in the network slice from the advertisement message. For example, with reference to FIG. 1, the network device 21 sends the advertisement message to the controller 11, so that the identifier of the network slice and the path information of the one or more paths in the network slice are transmitted from the network device 21 to the controller 11.

Step S204: The controller controls a message forwarding path based on the identifier of the network slice and the path information of the one or more paths in the network slice.

Because the network device reports the identifier of the network slice to the controller, the controller can control the message forwarding path based on the identifier of the network slice reported by the network device. There are a plurality of implementations of controlling a forwarding path. For example, the controlling a forwarding path includes, but is not limited to, path optimization, transmission resource allocation for the forwarding path, monitoring and recording a status of the forwarding path, presenting a topology view of a network topology to which the forwarding path belongs, and the like.

The path optimization refers to switching a path on which traffic is borne. To distinguish different paths, the following uses "first path" and "second path" to refer to paths that bear traffic before and after optimization respectively. A second path is configured to bear traffic forwarded on a first path. For example, a data flow A is originally forwarded through the first path. After path optimization, the data flow A is forwarded through the second path.

A scenario to which path optimization is applicable to includes, but is not limited to, the following scenario 1 and scenario 2.

Scenario 1: The controller performs path optimization when a path is unavailable.

Specifically, the controller determines whether one or more paths in the network slice are available based on connectivity information of the one or more paths in the advertisement message sent by the network device. When the controller determines that a first path in the one or more paths is unavailable, a second path is obtained.

Scenario 2: The controller performs path optimization when a bandwidth utilization rate reaches a threshold.

Specifically, the controller determines whether a bandwidth utilization rate of one or more paths in the network slice reaches the threshold based on network performance information of the one or more paths in the advertisement message sent by the network device. When the controller determines that a bandwidth utilization rate of a first path in the one or more paths reaches the threshold, a second path is obtained. Optionally, the threshold of the bandwidth utilization rate is a value pre-configured by a user.

In some embodiments, the bandwidth utilization rate of the first path is a bandwidth utilization rate of one or more links on the first path. For example, when the controller determines that a bandwidth utilization rate of one link on the first path reaches the threshold, the second path is obtained. For another example, when the controller determines that bandwidth utilization rates of a plurality of links on the first path reaches the threshold, the second path is obtained. Optionally, when being applied to the SR scenario, the first path is represented by a SID list. A link is represented by an End.X SID. The bandwidth utilization rate of the first path is a bandwidth utilization rate corresponding to one or more End.X SIDs in the SID list.

In some embodiments, after the controller obtains the second path, the controller generates and sends a path switching instruction to the network device. The path switching instruction includes path information of the second path. The path switching instruction indicates the network device to switch the message forwarding path to the second path. The network device receives the path switching instruction sent by the controller, and switches the path bearing traffic from the first path to the second path.

For example, the path information of the second path in the path switching instruction sent by the controller includes a SID list of the second path. The network device switches the path bearing traffic from the first path to the second path based on the SID list of the second path. Specifically, when the network device receives the traffic, if the traffic is traffic originally to be borne by the first path, the network device adds the SID list of the second path to each message in the traffic, and forwards the traffic that carries the SID List of the second path, so that the traffic is forwarded along the second path based on the SID list of the second path.

The path optimization manner includes, but is not limited to, an intra-slice optimization manner and an inter-slice optimization manner, which are described below respectively using (1) and (2).

### (1) Intra-slice optimization

Intra-slice optimization refers to switching different message forwarding paths in a same network slice. When intra-slice optimization is used, the second path is a path in a network slice corresponding to the identifier of the network slice. In other words, the second path and the first path are different paths in the same network slice. For example, a manner in which the controller obtains the second path includes: The controller uses the identifier of the network slice as an index to search for topology information of the network slice corresponding to the identifier of the network slice. The controller determines a path different from the first path based on the topology information of the network slice, and obtains the second path.

### (2) Inter-slice optimization

Inter-slice optimization refers to switching a message forwarding path in one network slice to a message forwarding path in another network slice. For example, when intra-slice optimization is used, the advertisement message includes an identifier of a first network slice and path information of a first path in the first network slice. The second path is a path in a second network slice, and the second network slice is different from the first network slice. Optionally, inter-slice optimization is applicable to a case in which one service has a plurality of network slices. For example, the first network slice and the second network slice correspond to a same service type. For another example, the first network slice and the second network slice correspond to a same user identifier.

Optionally, the second path is calculated by the controller based on a network topology of the network slice corresponding to the identifier of the network slice. For example, based on the topology of the network slice, the controller uses a flexible algorithm (Flexible Algorithm, FlexAlgo) to perform path computation, to obtain the second path. Optionally, a constraint condition used by the controller during the path computation includes not passing a link whose bandwidth utilization rate reaches the threshold on the first path.

According to the method provided in this embodiment, the network device includes slice information, such as an identifier of a network slice and information about a path in the network slice, in a message, and reports the message to the controller, so that slice information on a forwarding plane is consistent with slice information on a control plane, and the controller controls a message forwarding path based on slice information on the network device. Therefore, this helps improve an effect of controlling the message forwarding path by the controller

A message format included in embodiments of this application is described below.

In some embodiments of this application, the BGP-LS protocol is extended, so that the network device can report an identifier of a network slice including an SR policy candidate path (SR Policy Candidate Path) to the controller. Specifically, the identifier of the network slice is carried in an SR policy candidate path descriptor type-length-value (type-length-value, TLV) of the BGP-LS message.

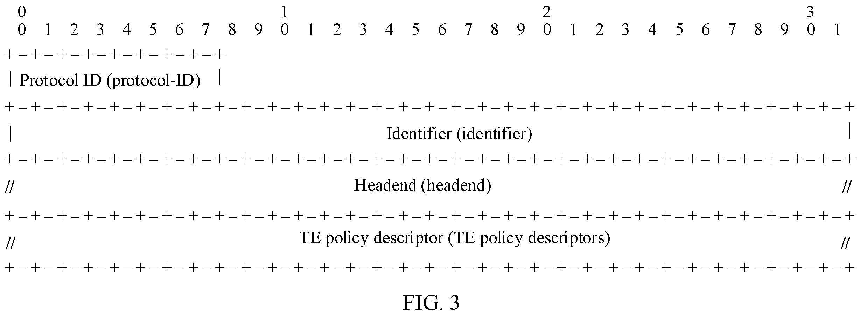

FIG. 3 is a schematic diagram of a format of a BGP-LS message. The message shown in FIG. 3 is for reporting BGP network layer reachability information (network layer reachability information, NLRI) of the SR policy. Meanings of fields in FIG. 3 are as follows:

A protocol ID (protocol-ID) field identifies a protocol from which a TE policy comes. For example, if content of the protocol ID field is 9, it indicates that the protocol from the TE policy comes is Segment Routing.

An identifier (identifier) field is an identifier of the BGP-LS in a protocol for collecting topologies. The identifier field occupies 64 bits.

The headend (headend) field carries information about the head end. The headend field includes at least one node descriptor (node descriptor).

A TE policy descriptor (TE policy descriptors) field is configured to describe the TE policy. The TE policy descriptor field includes one or more TLVs.

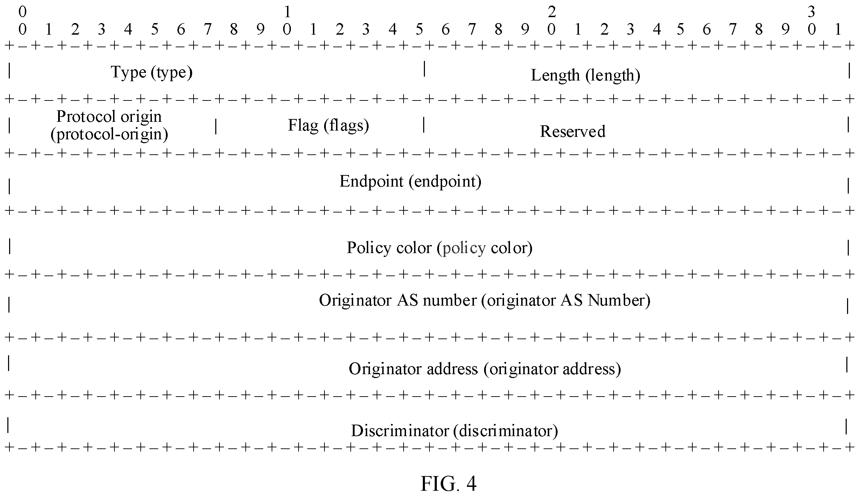

FIG. 4 is a schematic diagram of a format of an SR policy candidate path descriptor TLV in a BGP-LS message. FIG. 4 is located in the TE policy descriptor field in FIG. 3. The SR policy candidate path descriptor TLV carries information about a candidate path in the SR policy. The SR policy candidate path descriptor TLV includes a type field, a length field, a protocol origin (protocol-origin) field, an endpoint (endpoint) field, a flag (flags) field, a policy color (policy color) field, an originator autonomous system (autonomous system, AS) number (originator AS number) field, an originator address (originator address) field, and a discriminator (discriminator) field. Meanings of the fields are as follows:

The type field carries a type of the SR policy candidate path TLV. For example, content of the type field is 554.

The length field identifies a length of the SR policy candidate path TLV.

The protocol origin (protocol-origin) field identifies a protocol or a path through which the candidate path is generated. For example, when the SR policy is received through the BGP, content of the protocol origin field is 2. When the SR policy is configured locally, content of the protocol origin field is 3.

The endpoint (endpoint) field carries an address of a destination device in the SR policy. The endpoint field occupies 4 or 16 bytes.

The flag (flags) field includes one or more flag bits.

The policy color (policy color) field carries a color of the SR policy. The color field occupies 4 bytes.

The originator AS number (originator AS number) field carries an AS number (AS number, ASN) of the candidate path. The originator AS number field occupies four bytes.

The originator address (originator address) field carries an address identifier of the candidate path. The originator address occupies 4 or 16 bytes.

The discriminator (discriminator) field identifies the candidate path. Different candidate paths in a same SR policy can be distinguished by a discriminator. For example, a device advertises three candidate paths in the SR policy through the BGP. The three candidate paths correspond to three different discriminators. The three candidate paths are distinguished by their respective discriminators.

In some embodiments, a sub-TLV (sub-TLV) is extended in the SR policy candidate path descriptor TLV to report the identifier of the network slice. Specifically, the identifier of the network slice is carried in the sub-TLV of the SR policy candidate path descriptor TLV.

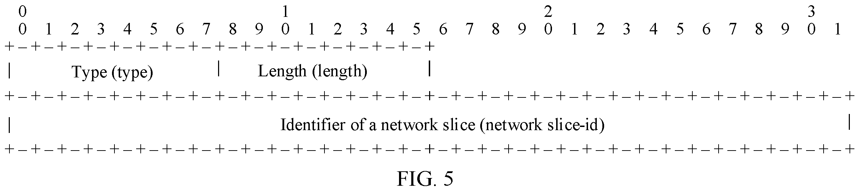

For example, FIG. 5 is a schematic diagram of a format of a sub-TLV carrying an identifier of a network slice. FIG. 5 shows a sub-TLV in FIG. 4. The sub-TLV carrying the identifier of the network slice includes a type field, a length field, and a slice ID field. The type field identifies that the TLV carries the identifier of the network slice. Optionally, the type field occupies one byte. Content of the length field is a length of the sub-TLV carrying the identifier of the network slice. Optionally, the length field occupies one byte. The slice ID field stores the identifier of the network slice. Optionally, the slice ID field occupies four bytes.

It can be learned from the message formats shown in FIG. 3 to FIG. 5 that, by extending the BGP-LS protocol, the sub-TLV of the network slice is added to the SR policy candidate path descriptor TLV of the BGP-LS packet, so that the network device can directly include the identifier of the network slice in the SR policy information message when reporting the SR policy information, leading to a low implementation complexity.

The method shown in FIG. 2 is described below by using an example in which the method shown in FIG. 2 is applied to an SR network.

An SRv6 policy tunnel in the following procedure is a path in the network slice in the method shown in FIG. 2. A SID list in the following procedure is the path information in the method shown in FIG. 2. A head node router in the following procedure is the network device in the method shown in FIG. 2.

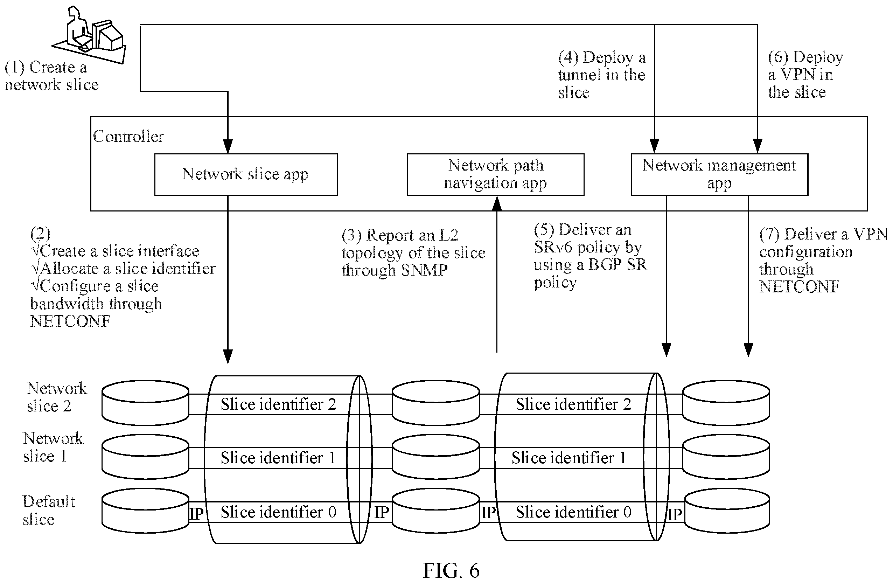

A network slice deployment procedure is described below. Referring to FIG. 6, the network slice deployment procedure includes the following step (1) to step (6).

Step (1): A controller creates a network slice of a service.

Step (2): The controller delivers, by using NETCONF, a slice interface as well as an identifier and a slice bandwidth of the network slice configured on the slice interface to a network device. A type of the slice interface includes, but is not limited to, a FlexE interface, a channelized sub-interface, and a FlexE sub-channel. Optionally, no IP address is configured on the network slice of the service. An IP address of a default slice is reused.

Step (3): A router reports a layer 2 topology of the network slice to the controller by using SNMP. The controller generates a layer 3 topology of the network slice of the service for tunnel path computation based on the layer 2 topology of the service network slice and a layer 3 topology of the default slice.

Step (4): The controller deploys an SRv6 policy tunnel in the network slice.

Specifically, the controller configures the SRv6 policy tunnel, and specifies a mapping relationship between an SRv6 policy and the identifier of the network slice. The controller performs SRv6 policy path computation in the slice topology based on path computation requirements (such as a delay and a bandwidth) input by a user.

Step (5): The controller delivers the SRv6 policy tunnel to the router through the BGP-SRv6 policy protocol. A configuration example of the SRv6 policy tunnel is as follows:

```
           segment-list list1
           index 1 sid ipv6 2:: 2: 100
           index 2 sid ipv6 3:: 3: 100
           srv6 policy policy 1
           endpoint 3:: 3 color green
           candidate-path preference 1
           network slice id 1
           segment-list list1
```

An SID list of the SRv6 policy tunnel in the foregoing configuration is segment-list list1, and the identifier of the network slice is 1. The SID list of the SRv6 policy tunnel includes two SIDs. One SID is 2:: 2: 100 and the other SID is 3:: 3: 100.

Step (6): The controller delivers a VPN configuration to the router by using NETCONF, where the VPN configuration is as follows:

```
           ip vpn-instance VRF1
           ipv4-family route-distinguisher 100: 1
           tnl-policy pl evpn //Configure a tunnel policy, preferably, an SRv6 policy tunnel
           #
          ip vpn-instance VRF2
           ipv4-family route-distinguisher 100: 1
           tnl-policy p2 evpn //Configure a tunnel policy, preferably, an SRv6 policy tunnel
          #
           ip vpn-instance VRF3
           ipv4-family route-distinguisher 100: 1
           tnl-policy p3 evpn //Configure a tunnel policy, preferably, an SRv6 policy tunnel
          #
```

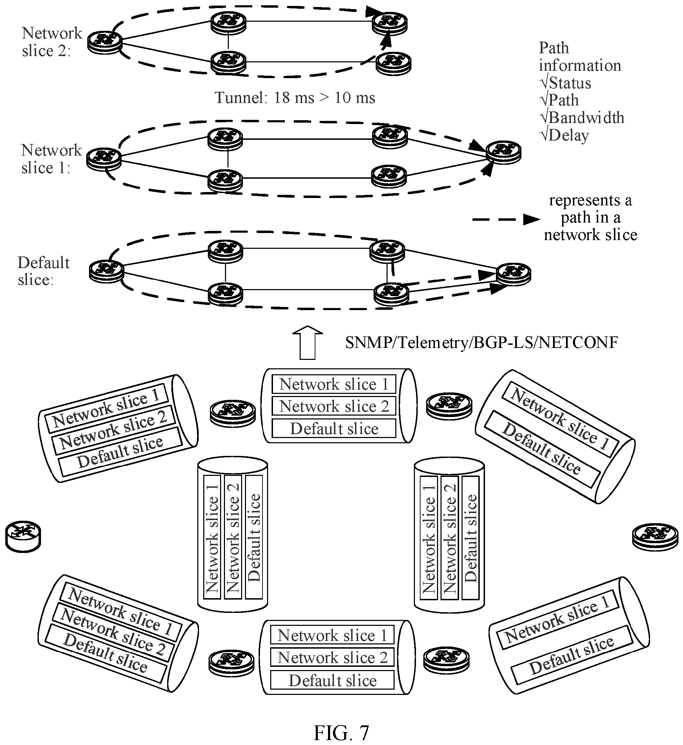

A tunnel monitoring procedure is described below. FIG. 7 is a schematic diagram of a scenario of a tunnel monitoring procedure. The tunnel monitoring procedure includes step (1) and step (2).

Step (1): A head node router establishes a BGP-LS neighbor relationship with a controller based on a BGP-LS address family. The head node router includes an identifier of a network slice in a sub-TLV of an SR policy candidate path descriptor TLV of the BGP-LS, and reports the SR policy candidate path descriptor TLV including the identifier of the network slice to the controller.

For example, the head node router reports the following content:

```
           segment-list list1
           index 1 sid ipv6 2:: 2: 100
           index 2 sid ipv6 3:: 3: 100
           srv6 policy policy 1
           endpoint 3:: 3 color green
           candidate-path preference 1
           network slice id 1
           segment-list list1
```

The foregoing content reported by the head node router indicates that a SID list of a path includes SID 2:: 2: 100 and SID 2:: 2: 100. An SR policy to which the path belongs is policy 1. An IP address of an endpoint (destination device) of the path is 3:: 3. A color corresponding to the path is green. A priority of a candidate path is 1 3:: 3. The identifier of the network slice is 1.

Optionally, the content reported by the head node router is the same as the content delivered by the controller in the slice deployment procedure. Optionally, the content reported by the head node router further includes a status of the SID list, for example, UP or down. The status of the SID list is obtained by the head node router through a BFD.

Optionally, the head node router reports traffic statistics information of an SRv6 policy to the controller by using the telemetry protocol.

Step (2): The controller monitors a status and traffic of the SRv6 policy tunnel in the network slice in real time after receiving the SR policy candidate path descriptor TLV reported by the router.

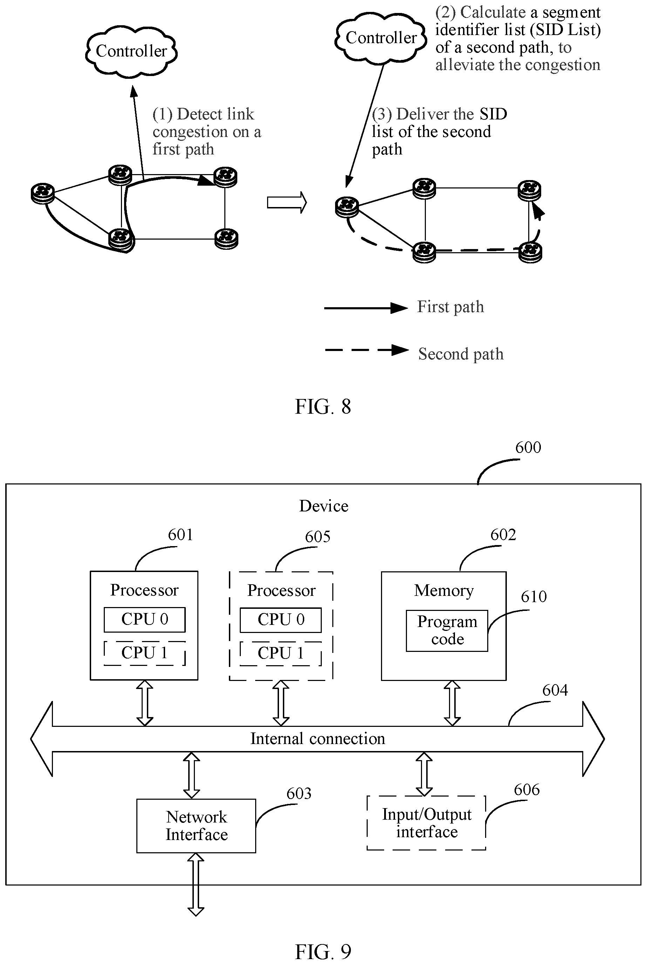

A tunnel optimization procedure is described below. FIG. 8 is a schematic diagram of a scenario tunnel optimization procedure. The tunnel optimization procedure includes the following step (1) to step (3).

Step (1): A controller collects bandwidth utilization rates of all links in a network slice through telemetry, and determines whether a bandwidth utilization rate of one or more links in a SID list exceeds a threshold. When the bandwidth utilization rate of the one or more links in the SID list exceeds the threshold, indicating that link congestion occurs in a path, the controller performs the following step (2).

Step (2): The controller performs path computation again. Specifically, the controller calculates a new SID list (namely, the SID list of a second path) corresponding to an identifier of the network slice.

Step (3): The controller sends the new SID list to a network device. The network device switches traffic from the original path corresponding to the SID list to a path corresponding to the new SID list.

Optionally, the threshold of the bandwidth utilization rate is from a bandwidth optimization policy configured by a user on the controller. The bandwidth optimization policy includes the threshold of the bandwidth utilization rate of the link. The bandwidth optimization policy indicates the controller to trigger path switching when a bandwidth utilization rate of a link reaches the threshold.

By performing traffic optimization, it can be ensured that bandwidth utilization rates of all links in the network slice are lower than a specified threshold, to balance the bandwidth utilization rates of all the links in the network slice.

A basic hardware structure of a network device and a controller is described below using an example.

FIG. 9 is a schematic diagram of a structure of a device 600 according to an embodiment of this application. The device 600 shown in FIG. 9 is the network device or the controller in the foregoing method embodiments.

Optionally, with reference to FIG. 1, the device 600 shown in FIG. 9 is the controller 11 in FIG. 1, or the device 600 is the network device 21, the network device 22, or the network device 23 in FIG. 1.

Optionally, with reference to FIG. 2, the device 600 shown in FIG. 9 is the network device in the method flowchart shown in FIG. 2, and the device 600 shown in FIG. 9 is configured to implement the steps performed by the network device in the method described in FIG. 2; or the device 600 shown in FIG. 9 is the controller in the method flowchart shown in FIG. 2, and the device 600 shown in FIG. 9 is configured to implement the steps performed by the controller in the method described in FIG. 2.

The device 600 includes at least one processor 601, a memory 602, and at least one network interface 603.

If the device 600 is configured as a network device, the processor 601 is configured to generate an advertisement message, and the network interface 603 is configured to send the advertisement message.

If the device 600 is configured as a controller, the network interface 603 is configured to receive an advertisement message, and the processor 601 is configured to control a message forwarding path based on an identifier of a network slice and path information of one or more paths in the network slice.

The processor 601 is, for example, a general-purpose central processing unit (central processing unit, CPU), a network processor (network processor, NP), a graphics processing unit (graphics processing unit, GPU), a neural processing unit (neural processing unit, NPU), a data processing unit (data processing unit, DPU), a microprocessor, or one or more integrated circuits configured to implement the solutions of this application. For example, the processor 601 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

The network interface 603 is any apparatus of a transceiver type, and is configured to communicate with another device or a communication network. The network interface 603 includes, for example, at least one of a wired network interface or a wireless network interface. The wired network interface is, for example, an Ethernet interface. The Ethernet interface is, for example, an optical interface, an electrical interface, or a combination thereof. The wireless network interface is, for example, a wireless local area network (wireless local area networks, WLAN) interface, a cellular network interface, or a combination thereof.

In some embodiments, the processor 601 includes one or more CPUs, for example, a CPU 0 and a CPU 1 shown in FIG. 9.

In some embodiments, the device 600 optionally includes a plurality of processors, such as the processor 601 and a processor 605 shown in FIG. 9. Each of the processors is, for example, a single-core processor (single-CPU) or a multi-core processor (multi-CPU). The processor herein alternatively refers to one or more devices, circuits, and/or processing cores configured to process data (for example, computer program instructions).

In some embodiments, the device 600 further includes an internal connection 604. The processor 601, the memory 602, and the at least one network interface 603 are connected by the internal connection 604. The internal connection 604 includes a channel for transmitting information between the foregoing components. Optionally, the internal connection 604 is a board or a bus. Optionally, the internal connection 604 is classified into an address bus, a data bus, a control bus, and the like.

Optionally, the processor 601 reads program code 610 stored in the memory 602 to implement the method in the foregoing embodiments, or the processor 601 uses internally stored program code to implement the method in the foregoing embodiments. When the processor 601 reads the program code 610 stored in the memory 602 to implement the methods in the foregoing embodiments, the memory 602 stores program code for implementing the message processing method provided in embodiments of this application.

The memory 602 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, and the like), a magnetic disk storage medium or another magnetic storage device, or any other medium that can be configured to carry or store desired program code in a form of instructions or a data structure and that can be accessed by a computer, but is not limited thereto. Optionally, the memory 602 exists independently, and is connected to the processor 601 by the internal connection 604. Alternatively, the memory 602 and the processor 601 may optionally be integrated together.

In some embodiments, the device 600 further includes an input/output interface 606. The input/output interface 606 is connected to the internal connection 604.

For more details of implementing the foregoing functions by the processor 601, refer to the descriptions in the foregoing method embodiments. Details are not described herein again.

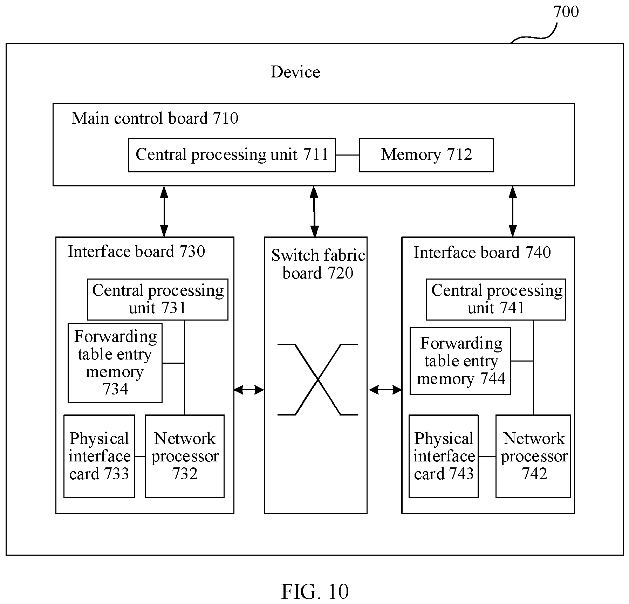

FIG. 10 is a schematic diagram of a structure of a device 700 according to an embodiment of this application.

FIG. 10 is a schematic diagram of a structure of a device 700 according to an embodiment of this application. The device 700 shown in FIG. 10 is the network device or the controller in the foregoing method embodiments.

Optionally, with reference to FIG. 1, the device 700 shown in FIG. 10 is the controller 11 in FIG. 1, or the device 700 is the network device 21, the network device 22, or the network device 23 in FIG. 1.

Optionally, with reference to FIG. 2, the device 700 shown in FIG. 10 is the network device in the method flowchart shown in FIG. 2, and the device 700 shown in FIG. 10 is configured to implement the steps performed by the network device in the method described in FIG. 2; or the device 700 shown in FIG. 10 is the controller in the method flowchart shown in FIG. 2, and the device 700 shown in FIG. 10 is configured to implement the steps performed by the controller in the method described in FIG. 2.

The device 700 includes a main control board 710 and an interface board 730.

The main control board is also referred to as a main processing unit (main processing unit, MPU) or a route processing card (route processor card). The main control board 710 is configured to control and manage all components in the device 700, including route computation, device management, device maintenance, and protocol processing functions. The main control board 710 includes a central processing unit 711 and a memory 712.

The interface board 730 is also referred to as a line interface processing unit (line processing unit, LPU), a line card (line card), or a service board. The interface board 730 is configured to provide various service interfaces and implement data message forwarding. The service interface includes, but is not limited to, an Ethernet interface, a POS (packet over SONET/SDH) interface, and the like. The Ethernet interface is, for example, a flexible Ethernet service interface (flexible Ethernet client, FlexE client). The interface board 730 includes a central processing unit 731, a network processor 732, a forwarding table entry memory 734, and a physical interface card (physical interface card, PIC) 733.

The central processing unit 731 on the interface board 730 is configured to control and manage the interface board 730 and communicate with the central processing unit 711 on the main control board 710.

The network processor 732 is configured to implement message forwarding processing. A form of the network processor 732 is, for example, a forwarding chip. Specifically, the network processor 732 is configured to forward a received message based on a forwarding table stored in the forwarding table entry memory 734. If a destination address of the message is an address of the device 700, the message is reported to a CPU (for example, the central processing unit 711) for processing. If the destination address of the message is not the address of the device 700, a next hop and an egress interface corresponding to the destination address are found in the forwarding table based on the destination address. The message is forwarded to the egress interface corresponding to the destination address. Processing on an uplink message includes processing on a message ingress interface and forwarding table lookup. Processing on a downlink message includes forwarding table lookup and the like.

The physical interface card 733 is configured to implement a physical layer interconnection function. Original traffic enters the interface board 730 from the physical interface card 733, and a processed message is sent out from the physical interface card 733. The physical interface card 733, also referred to as a subcard, may be mounted on the interface board 730, and is responsible for converting an optical/electrical signal into a message, performing validity check on the message, and forwarding the message to the network processor 732 for processing. In some embodiments, the central processing unit may also perform a function of the network processor 732, for example, implement software forwarding based on a general CPU. Therefore, the network processor 732 is not required in the physical interface card 733.

Optionally, the device 700 includes a plurality of interface boards. For example, the device 700 further includes an interface board 740. The interface board 740 includes a central processing unit 741, a network processor 742, a forwarding table entry memory 744, and a physical interface card 743.

Optionally, the device 700 further includes a switch fabric board 720. The switch fabric board 720 is also referred to as, for example, a switch fabric unit (switch fabric unit, SFU). When the network device has the plurality of interface boards 730, the switch fabric board 720 is configured to complete data exchange between the interface boards. For example, the interface board 730 and the interface board 740 communicate with each other, for example, through the switch fabric board 720.

The main control board 710 is coupled to the interface board 730. For example, the main control board 710, the interface board 730, the interface board 740, and the switch fabric board 720 are connected to a system backplane by a system bus to implement interworking. In a possible implementation, an inter-process communication protocol (inter-process communication, IPC) channel is established between the main control board 710 and the interface board 730, and communication is performed between the main control board 710 and the interface board 730 through the IPC channel.

Logically, the device 700 includes a control plane and a forwarding plane. The control plane includes the main control board 710 and the central processing unit 731. The forwarding plane includes components for forwarding, for example, the forwarding table entry memory 734, the physical interface card 733, and the network processor 732. The control plane performs functions such as routing, generating a forwarding table, processing signaling and a protocol message, and configuring and maintaining a device status. The control plane delivers the generated forwarding table to the forwarding plane. On the forwarding plane, by performing table lookup based on the forwarding table delivered by the control plane, the network processor 732 forwards a message received by the physical interface card 733. The forwarding table delivered by the control plane is, for example, stored in the forwarding table entry memory 734. In some embodiments, the control plane and the forwarding plane are, for example, completely separated, and are not on a same device.

Operations on the interface board 740 are the same as operations on the interface board 730. For brevity, details are not described again. The device 700 may correspond to the network device or the controller in the foregoing method embodiments. The main control board 710, the interface board 730, and/or the interface board 740 in the device 700 implement, for example, functions and/or various steps implemented by the network device or the controller in the foregoing method embodiments. For brevity, details are not described herein again.

It should be noted that there may be one or more main control boards. When there are a plurality of main control boards, the main control boards may include, for example, an active main control board and a standby main control board. There may be one or more interface boards. A network device having a stronger data processing capability provides more interface boards. There may also be one or more physical interface cards on the interface board. There may be no switch fabric board or one or more switch fabric boards. When there are a plurality of switch fabric boards, load balancing and redundancy backup may be implemented together. In a centralized forwarding architecture, the network device may not need the switch fabric board, and the interface board provides a function of processing service data in an entire system. In a distributed forwarding architecture, the network device may have at least one switch fabric board, and data exchange between a plurality of interface boards is implemented through the switch fabric board, to provide a large-capacity data exchange and processing capability. Therefore, a data access and processing capability of a network device in the distributed architecture is better than that of a device in the centralized architecture. Optionally, the network device may alternatively be in a form in which there is only one card. To be specific, there is no switch fabric board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a weak data exchange and processing capability. A specific architecture that is to be used depends on a specific networking deployment scenario. This is not limited herein.

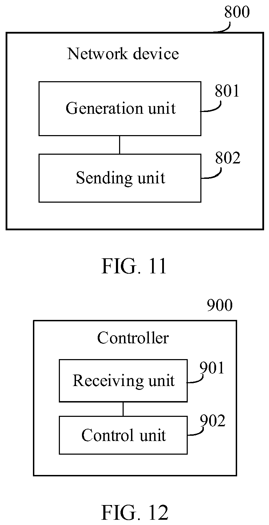

FIG. 11 is a schematic diagram of a structure of a network device according to an embodiment of this application. A network device 800 shown in FIG. 11 implements, for example, functions of the network device in the method shown in FIG. 2.

Referring to FIG. 11, the network device 800 includes a generation unit 801 and a sending unit 802. The generation unit 801 is configured to support the network device 800 in performing step S201. The sending unit 802 is configured to support the network device 800 in performing step S202.

The apparatus embodiment described in FIG. 11 is merely an example. For example, the unit division is merely logical function division, and there may be other division during actual implementation. For example, a plurality of units or components may be combined or integrated into another system, or some features may be ignored or not performed. Functional units in embodiments of this application may be integrated into one processing unit, or each of the units may exist alone physically, or two or more units are integrated into one unit. All or some units in the network device 800 are implemented through software, hardware, firmware, or any combination thereof. All the units in FIG. 11 may be implemented in a form of hardware, or may be implemented in a form of a software functional unit. For example, when being implemented through software, the generation unit 801 may be implemented by a software functional unit generated after the at least one processor 601 in FIG. 9 reads the program code stored in the memory 602. Alternatively, all the units in FIG. 11 may be respectively implemented by different hardware in the network device. For example, the generation unit 801 is implemented by some processing resources (for example, one core or two cores in a multi-core processor) in the at least one processor 601 in FIG. 9, or is implemented by a programmable device such as a field-programmable gate array (field-programmable gate array, FPGA) or a co-processor. The sending unit 802 is implemented by the network interface 603 in FIG. 9. It is obvious that the foregoing functional units may alternatively be implemented through a combination of software and hardware. For example, the sending unit 802 is implemented by a hardware programmable device, and the generation unit 801 is a software functional unit generated after a CPU reads program code stored in the memory.

FIG. 12 is a schematic diagram of a structure of a controller 900 according to an embodiment of this application.

Referring to FIG. 12, the controller 900 includes a receiving unit 901 and a control unit 902. The receiving unit 901 is configured to support the controller 900 in performing step S203. The control unit 902 is configured to support the controller 900 in performing step S204. All or some units in the controller 900 are implemented through software, hardware, firmware, or any combination thereof. All the units in the controller 900 are configured to perform corresponding functions of the controller in the method shown in FIG. 2.

Optionally, the controller 900 further includes a sending unit, and the sending unit is configured to support the controller 900 in sending the SID list corresponding to the second path to the network device.

The apparatus embodiment described in FIG. 12 is merely an example. For example, the unit division is merely logical function division, and there may be other division during actual implementation. For example, a plurality of units or components may be combined or integrated into another system, or some features may be ignored or not performed. Functional units in embodiments of this application may be integrated into one processing unit, or each of the units may exist alone physically, or two or more units are integrated into one unit. All the units in FIG. 12 may be implemented in a form of hardware, or may be implemented in a form of a software functional unit. For example, when being implemented through software, the control unit 902 may be implemented by a software functional unit generated after the at least one processor 601 in FIG. 9 reads the program code stored in the memory 602. Alternatively, all the units in FIG. 12 may be respectively implemented by different hardware in the controller. For example, the control unit 902 is implemented by some processing resources (for example, one core or two cores in the multi-core processor) in the at least one processor 601 in FIG. 9, or is implemented by the remaining processing resources (for example, other cores in the multi-core processor) in the at least one processor 601 in FIG. 9, or is implemented by a programmable device such as a field-programmable gate array (field-programmable gate array, FPGA) or a coprocessor. The receiving unit 901 and the sending unit are implemented by the network interface 603 in FIG. 9. It is obvious that the foregoing functional units may alternatively be implemented by a combination of software and hardware. For example, the receiving unit 901 and the sending unit are implemented by a hardware programmable device, and the control unit 902 is a software functional unit generated after a CPU reads program code stored in the memory.

Embodiments of this specification are all described in a progressive manner, for same or similar parts in the embodiments, refer to these embodiments, and descriptions of each embodiment focus on a difference from other embodiments. A refers to B means that A is the same as B or A is a simple variation of B.

In the specification and claims in embodiments of this application, the terms "first", "second", and the like are for distinguishing between different objects, but are not intended to describe a specific order of the objects, and cannot be understood as an indication or implication of relative importance. For example, the first path and the second path are for distinguishing between different paths, but are not intended to describe a specific order of the paths, and cannot be understood that the first path is more important than the second path.

In embodiments of this application, unless otherwise specified, "a plurality of" means two or more. For example, a plurality of paths refers to two or more paths.

All or some of the foregoing embodiments may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive (Solid-State Drive, SSD)), or the like.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A message processing method, comprising:
generating, by a network device, an advertisement message, wherein the advertisement message comprises an identifier of a network slice and path information of one or more paths in the network slice; and
sending, by the network device, the advertisement message to a controller.

2. The method according to claim 1, wherein the advertisement message is a border gateway protocol-link state BGP-LS message.

3. The method according to claim 2, wherein the identifier of the network slice is carried in an SR policy candidate path descriptor TLV of the BGP-LS message.

4. The method according to claim 3, wherein the identifier of the network slice is carried in a sub-TLV of the SR policy candidate path descriptor TLV, the sub-TLV comprises a slice identifier (Slice ID) field, and the slice ID field stores the identifier of the network slice.

5. The method according to any one of claims 1 to 4, wherein the path information comprises a segment identifier list (SID List) corresponding to the one or more paths.

6. The method according to claim 5, wherein the path information further comprises status information of the one or more paths.

7. The method according to claim 6, wherein the status information comprises one or more of the following information: at least one of traffic statistics information, network performance information, and connectivity information.

8. The method according to claim 7, wherein the connectivity information identifies whether a corresponding path is available or unavailable.

9. The method according to any one of claims 1 to 8, wherein the advertisement message indicates the controller to control a message forwarding path based on the identifier of the network slice and the path information.

10. The method according to any one of claims 1 to 9, wherein the network device is an ingress node of a segment routing SR network.

11. A message processing method, comprising:
receiving, by a controller, an advertisement message sent by a network device, wherein the advertisement message comprises an identifier of a network slice and path information of one or more paths in the network slice; and
controlling, by the controller, a message forwarding path based on the identifier of the network slice and the path information of the one or more paths in the network slice.

12. The method according to claim 11, wherein the advertisement message is a border gateway protocol-link state BGP-LS message.

13. The method according to claim 12, wherein the identifier of the network slice is carried in an SR policy candidate path descriptor TLV of the BGP-LS message.

14. The method according to claim 13, wherein the identifier of the network slice is carried in a sub-TLV of the SR policy candidate path descriptor TLV, the sub-TLV comprises a slice identifier (Slice ID) field, and the slice ID field stores the identifier of the network slice.

15. The method according to any one of claims 11 to 14, wherein the path information comprises a segment identifier list (SID List) corresponding to the one or more paths.

16. The method according to claim 15, wherein the path information further comprises status information of the one or more paths.

17. The method according to claim 16, wherein the status information comprises one or more of the following information: at least one of traffic statistics information, network performance information, and connectivity information.

18. The method according to claim 17, wherein the connectivity information identifies whether a corresponding path is available or unavailable.

19. The method according to claim 18, wherein the controlling, by the controller, a message forwarding path based on the identifier of the network slice and the path information of the one or more paths in the network slice comprises:
obtaining, by the controller, a second path when determining that a first path in the one or more paths is unavailable, wherein the second path is configured to bear traffic forwarded on the first path.

20. The method according to any one of claims 11 to 17, wherein the controlling, by the controller, a message forwarding path based on the identifier of the network slice and the path information of the one or more paths in the network slice comprises:
obtaining, by controller, the second path when determining that a bandwidth utilization rate of the first path in the one or more paths reaches a threshold, wherein the second path is configured to bear the traffic forwarded on the first path.

21. The method according to claim 20, wherein the bandwidth utilization rate of the first path is a bandwidth utilization rate of one or more links on the first path.

22. The method according to any one of claims 19 to 21, wherein the second path is a path in a network slice corresponding to the identifier of the network slice.

23. The method according to claim 22, wherein the second path is calculated by the controller based on a network topology of the network slice corresponding to the identifier of the network slice.

24. The method according to any one of claims 19 to 23, wherein the method further comprises:
sending, by the controller, a SID list corresponding to the second path to the network device.

25. A network device, comprising:
a generation unit, configured to generate an advertisement message, wherein the advertisement message comprises an identifier of a network slice and path information of one or more paths in the network slice; and
a sending unit, configured to send the advertisement message to a controller.

26. The network device according to claim 25, wherein the advertisement message is a border gateway protocol-link state BGP-LS message.

27. The network device according to claim 26, wherein the identifier of the network slice is carried in an SR policy candidate path descriptor TLV of the BGP-LS message.

28. The network device according to claim 27, wherein the identifier of the network slice is carried in a sub-TLV of the SR policy candidate path descriptor TLV, the sub-TLV comprises a slice identifier (Slice ID) field, and the slice ID field stores the identifier of the network slice.

29. The network device according to any one of claims 25 to 28, wherein the path information comprises a segment identifier list (SID List) corresponding to the one or more paths.

30. The network device according to claim 29, wherein the path information further comprises status information of the one or more paths.

31. The network device according to claim 30, wherein the status information comprises one or more of the following information: at least one of traffic statistics information, network performance information, and connectivity information.

32. The network device according to claim 31, wherein the connectivity information identifies whether a corresponding path is available or unavailable.

33. The network device according to any one of claims 25 to 32, wherein the advertisement message indicates the controller to control a message forwarding path based on the identifier of the network slice and the path information.

34. The network device according to any one of claims 25 to 33, wherein the network device is an ingress node of a segment routing SR network.

35. A controller, comprising:
a receiving unit, configured to receive an advertisement message sent by a network device, wherein the advertisement message comprises an identifier of a network slice and path information of one or more paths in the network slice; and
a control unit, configured to control a message forwarding path based on the identifier of the network slice and the path information of the one or more paths in the network slice.

36. The controller according to claim 35, wherein the advertisement message is a border gateway protocol-link state BGP-LS message.

37. The controller according to claim 36, wherein the identifier of the network slice is carried in an SR policy candidate path descriptor TLV of the BGP-LS message.

38. The controller according to claim 37, wherein the identifier of the network slice is carried in a sub-TLV of the SR policy candidate path descriptor TLV, the sub-TLV comprises a slice identifier (Slice ID) field, and the slice ID field stores the identifier of the network slice.

39. The controller according to any one of claims 35 to 38, wherein the path information comprises a segment identifier list (SID List) corresponding to the one or more paths.

40. The controller according to claim 39, wherein the path information further comprises status information of the one or more paths.

41. The controller according to claim 40, wherein the status information comprises one or more of the following information: at least one of traffic statistics information, network performance information, and connectivity information.

42. The controller according to claim 41, wherein the connectivity information identifies whether a corresponding path is available or unavailable.

43. The controller according to claim 42, wherein the control unit is configured to obtain a second path when determining that a first path in the one or more paths is unavailable, wherein the second path is configured to bear traffic forwarded on the first path.

44. The controller according to any one of claims 35 to 43, wherein the control unit is configured to obtain the second path when determining that a bandwidth utilization rate of the first path in the one or more paths reaches a threshold, wherein the second path is configured to bear the traffic forwarded on the first path.

45. The controller according to claim 44, wherein the bandwidth utilization rate of the first path is a bandwidth utilization rate of one or more links on the first path.

46. The controller according to any one of claims 43 to 45, wherein the second path is a path in a network slice corresponding to the identifier of the network slice.

47. The controller according to claim 46, wherein the second path is calculated by the controller based on a network topology of the network slice corresponding to the identifier of the network slice.

48. The controller according to any one of claims 43 to 47, wherein the controller further comprises:
a sending unit, configured to send a SID list corresponding to the second path to the network device.

49. A network system, wherein the system comprises the network device according to any one of claims 25 to 34 and the controller according to any one of claims 35 to 48.

50. A computer-readable storage medium, wherein the storage medium stores at least one instruction, and when the instruction is run on a computer, the computer is enabled to perform the method according to any one of claims 1 to 24.
